# EUROPÄISCHE PATENTSCHRIFT

(11) **EP 2 282 919 B1**
(45) Veröffentlichungstag und Bekanntmachung des Hinweises auf die Patenterteilung: **20.06.2012**
(21) Anmeldenummer: 09741989.9
(22) Anmeldetag: 24.04.2009
(51) Int. Cl.: B62B 3/02, A47B 31/04

(54) **EINKLAPPBARER TRANSPORTWAGEN**
FOLDING TRANSPORT CART
CHARIOT DE TRANSPORT REPLIABLE

(30) Priorität: 06.05.2008 DE 102008022379
(43) Veröffentlichungstag der Anmeldung: 16.02.2011
(73) Patentinhaber: Airbus Operations GmbH, 21129 Hamburg (DE)
(72) Erfinder: BAATZ, Andreas, 21644 Sauensiek (DE); TAN, Joyce, Spanish Fort, AL 36527 (US); BOE, Christian, DK-3520 Farum (DK)
(74) Vertreter: UEXKÜLL & STOLBERG
(86) Internationale Anmeldenummer: PCT/EP2009/054942
(87) Internationale Veröffentlichungsnummer: WO 2009/135771

(56) Entgegenhaltungen:
- DE-U1- 9 406 270
- US-A- 4 705 247
- US-A- 5 829 765
- US-A1- 2006 097 487
- US-B1- 6 443 481

## Beschreibung

Die Erfindung betrifft einen einklappbaren Transportwagen, der beispielsweise für den Transport und das Repräsentieren von Waren und Gegenständen an Bord eines Flugzeugs dient. Insbesondere betrifft die Erfindung einen Transportwagen nach dem Oberbegriff von Anspruch 1.

Typische herkömmliche Transportwagen bestehen aus einem Gehäuse auf Rollen und bieten in dem Gehäuse Stauraum für Geräte und Waren. Insbesondere werden derartige Transportwägen in Bahnen und Flugzeugen eingesetzt, um den Fahrgästen während der Fahrt an dem Sitzplatz Verpflegung und Getränke anbieten zu können. Dazu müssen die Transportwägen in dem jeweiligen Verkehrsmittel manövrierbar sein. Aufgrund der höheren Fahrgastdichte werden in Flugzeugen besonders großvolumige Transportwägen eingesetzt. Ihre Oberseite kann als Arbeitsfläche genutzt werden. Die Länge des Transportwagens ist in der Regel so gewählt, dass er manövrierbar bleibt, d.h. die Länge darf nicht so groß werden, dass enge Kurven nicht mehr durchfahren werden können. Die Höhe des Transportwagens hängt einerseits von dem gewünschten Volumen des Stauraums ab, andererseits soll die Arbeitsfläche des Transportwagens unter ergonomischen Gesichtspunkten günstig erreichbar sein, d.h. Tätigkeiten auf der Arbeitsfläche sollten durch das Personal mit möglichst geradem Rücken ausgeführt werden können. Die Breite des Transportwagens hängt ebenfalls von der Manövrierbarkeit des Wagens ab, und hier ist beispielsweise die Breite des Ganges zwischen den Sitzreihen in einem Flugzeug maßgeblich.

Transportwägen der genannten Art sind aufgrund ihres großen Volumens jedoch oft sperrig und beanspruchen viel Platz, wenn sie nicht im Einsatz sind und abgestellt werden sollen. Dieser Platz steht dann für andere Zwecke nicht mehr zur Verfügung. Abgestellt werden die Transportwägen in der Regel unterhalb der Arbeitsplatte der Bordküche (Galley), so dass durch die lichte Höhe der Arbeitsplatte der Galley wiederum die maximal mögliche Höhe des Transportwagens vorgegeben wird. Um mit dem abgestellten Transportwagen möglichst wenig Platz in der Galley zu belegen, wurden im Stand der Technik bereits klappbare oder faltbare Transportwägen vorgeschlagen.

Aus US 4 705 247 ist ein Faltwagen mit je zwei ersten und zweiten länglichen überkreuzten Standbeinen auf entgegengesetzten Seiten bekannt. Je zwei überkreuzte Standbeine umfassen ein außen liegendes Bein und ein innen liegendes Bein, welche schwenkbar in ihrem Mittelteil verbunden sind, wodurch die entfernten Endabschnitte der Beine, die vom Mittelabschnitt nach außen verlaufen, sich in die freistehende Stellung ausdehnen und in eine Lagerstellung zusammenfalten. Die Mittelabschnitte der schwenkbar verbundenen Beine sind mit gegenüberliegenden eingeschnittenen Kanälen versehen, welche quer zueinander verlaufen und ineinander passen, wobei diese Beine auf jeder Seite des Wagens in einer gemeinsamen Ebene angeordnet sind.

Aus US 6 443 481 ist ein klappbarer Transportwagen bekannt mit einem klappbaren Rahmen zum Tragen eines darauf abgestellten, abnehmbaren Containers. Der Rahmen umfasst Trägerelemente, von denen jedes zwei Beine aufweist, die sich von jedem Trägerelement nach unten erstrecken, und einen Seitenarm, der sich zwischen zwei der Beine auf jeder der einander gegenüber liegenden Seiten des Rahmens erstreckt. Die Seitenarme sichern den Rahmen in der entfalteten, offenen Position, in der die Trägerelemente physisch voneinander beabstandet sind, um den abnehmbaren Container zu tragen. Die Seitenarme umfassen Gelenke, um die Seitenarme in eine gemeinsame Ebene, die im wesentlichen parallel zu jedem Trägerelement liegt, zu klappen. Der Rahmen umfasst außerdem einen Boden, der die Beine des Rahmens miteinander verbindet, so dass eine ebene Plattform in dem Wagen gebildet wird. Der Boden ist im wesentlichen in dieselbe gemeinsame Ebene klappbar, in die die Seitenarme gefaltet werden, so dass beim Einklappen der Arme und des Bodens der Wagen in die geschlossene Position gelangt.

Aus DE 94 06 270 U1 ist ein Vielzweck-/Transportwagen gemäß dem Oberbegriff von Anspruch 1 zur Aufnahme von Gütern aller Art bekannt, bei dem die Querverbindungen oder die Längeverbindungen zu, Zusammenklappen und Seitenteile zu, Schwenken ausgebildet sind, wodurch im leeren Zustand ein Zusammenklappen möglich ist.

Die genannten Wägen arbeiten zwar zufriedenstellend, stellen jedoch noch keine optimale Lösung dar. Sie sind in ihren Ausmaßen immer noch relativ sperrig, und insbesondere das Ein- und Ausklappen der Wägen erfordert noch mehrere miteinander koordinierte Aktionen. Damit verbunden ist jedes Mal auch eine gewisse Verletzungsgefahr. Andererseits muss die Stabilität des Wagens in ausgeklapptem Zustand unbedingt gewährleistet bleiben und verhindert werden, dass der Wagen beim Transportieren von Waren durch eine falsche Bedienung versehentlich eingeklappt wird.

Es ist Aufgabe der vorliegenden Erfindung, einen Transportwagen zu schaffen, der einfach und zuverlässig ein- und ausgeklappt werden kann, wobei der materielle und finanzielle Aufwand bei der Herstellung des Wagens möglichst gering sein soll.

Diese Aufgabe wird gelöst durch einen Transportwagen nach Anspruch 1. Bevorzugte Ausführungsformen des Wagens sind Gegenstand der Unteransprüche.

Der Erfindung liegt die Erkenntnis zugrunde, dass beim Ein- und Ausklappen des Wagens mehrere Scharniere betätigt werden müssen. Dies erfordert grundsätzlich ebenso viele Handgriffe wie es Scharniere oder Gelenke gibt. Um diese Anzahl zu reduzieren, werden erfindungsgemäß durch Betätigen eines vorgegebenen Klappmechanismus gleichzeitig mehrere weitere Mechanismen betätigt. Dazu ist eine Betätigungseinrichtung zur Kraftübertragung zwischen einem Deckelteil und einem zu verriegelnden Bodenteil in dem erfindungsgemäßen Transportwagen vorgesehen.

Der erfindungsgemäße einklappbare Transportwagen, der in einer Parkkonfiguration eine minimale Ausdehnung und in einer Einsatzkonfiguration eine maximale Ausdehnung in einer Querrichtung aufweist, umfasst: zwei Seitenteile, die sich im wesentlichen senkrecht zu der Querrichtung des Transportwagens erstrecken, und ein einklappbares Bodenteil, das zwei flächige Bodensegmente umfasst, die jeweils auf einer Bodenseitenachse gelenkig mit einem Seitenteil und auf einer gemeinsamen Bodenzentralachse gelenkig miteinander verbunden sind, so dass sie in den Transportwagen hineinklappbar sind. Gekennzeichnet ist der erfindungsgemäße Transportwagen durch einen Bodenverriegelungsmechanismus zum Verriegeln des einklappbaren Bodenteils in der Einsatzkonfiguration und ein Deckelteil, das gelenkig mit einem der Seitenteile verbunden ist, wobei der Bodenverriegelungsmechanismus den einklappbaren Bodenteil freigibt, wenn das Deckelteil in den Transportwagen hineingeklappt wird.

Bevorzugte Ausführungsformen der Erfindung weisen als zusätzliches bzw. - soweit dies technisch möglich und sinnvoll ist - als mehrere zusätzliche Merkmale auf, dass:
- der Bodenverriegelungsmechanismus wenigstens einen drehbaren Haken umfasst, der in der Einsatzkonfiguration des Wagens das dem Haken gegenüberliegende Bodensegment an seinem freien Ende in einer im wesentlichen horizontalen Position hält;
- der wenigstens eine Haken um die Bodenseitenachse drehbar ist und das dem Haken gegenüberliegende Bodensegment wenigstens einen Verlängerungsarm umfasst, der in der Einsatzkonfiguration von dem Haken in einer im wesentlichen horizontalen Position gehalten wird;
- an einem freien Ende des Verlängerungsarms ein Greifer angeordnet ist, der insbesondere eine Öse als Gegenstück zu dem Haken umfasst;
- der Bodenverriegelungsmechanismus wenigstens eine Betätigungsstange umfasst, die eine Drehbewegung des Deckelteils auf den drehbaren Haken überträgt, so dass dieser das gegenüberliegende Bodensegment freigibt;
- der Haken durch eine Vorspannfeder in eine Halteposition vorgespannt ist;
- wenigstens ein Bodensegment durch eine Feder um die Bodenseitenachse in eine im wesentlichen vertikale Stellung zu dem Seitenteil vorgespannt ist;
- die beiden Bodensegmente durch eine Feder um die gemeinsame Bodenzentralachse in eine im wesentlichen koplanare Stellung vorgespannt sind;
- das Deckelteil ein erstes und ein zweites Deckelsegment umfasst, die jeweils auf einer Deckelseitenachse gelenkig mit einem Seitenteil und auf einer gemeinsamen Deckelzentralachse gelenkig miteinander verbunden sind;
- wenigstens ein Deckelsegment durch eine Feder um die Deckelseitenachse in eine im wesentlichen vertikale Stellung zu dem Seitenteil vorgespannt ist;
- die beiden Deckelsegmente durch eine Feder um die gemeinsame Deckelzentralachse in eine im wesentlichen koplanare Stellung vorgespannt sind;
- das Deckelteil durch einen Deckelverriegelungsmechanismus in der Einsatzkonfiguration verriegelbar ist;
- wenigstens ein Stabilisierungsgelenk mit drei im wesentlichen vertikalen Achsen unterhalb der Bodensegmente vorgesehen ist, das in der Einsatzkonfiguration des Transportwagens eine im wesentlichen lineare Form aufweist und in der Parkkonfiguration des Transportwagens im wesentlichen die Form eines gleichschenkligen Dreiecks aufweist;
- die Seitenteile auf Schwenkrollen fußen, die um eine vertikale Achse drehbar sind, wobei jede der Schwenkrollen einen Magneten aufweist, so dass sich benachbarte Schwenkrollen parallel zueinander stellen, wenn ihr Abstand voneinander kleiner als ein vorgegebener Abstand ist;
- die zwei Seitenteile flächige Wandelemente umfassen.

Ein Vorteil der erfindungsgemäßen Lösung besteht darin, dass das Ein- und Ausklappen des Transportwagens durch nur eine Person allein erfolgen kann, so dass hierfür nicht jedesmal zwei oder mehr Personen gebunden sind.

Weitere Merkmale und Vorteile der Erfindung ergeben sich aus der folgenden Beschreibung von bevorzugten Ausführungsbeispielen, wobei Bezug genommen wird auf die beigefügte Zeichnung.
Fig. 1 zeigt schematisch einen erfindungsgemäßen Transportwagen in einer Einsatzkonfiguration im Querschnitt entlang einer Querachse.
Fig. 2 zeigt schematisch einen erfindungsgemäßen Transportwagen in einer Parkkonfiguration im Querschnitt entlang einer Querachse.
Fig. 3 zeigt schematisch in vergrößerter Darstellung eine Ausführungsform des erfindungsgemäßen Verriegelungsmechanismus in verriegelter Position im Querschnitt.
Fig. 4 zeigt schematisch in vergrößerter Darstellung eine Ausführungsform des erfindungsgemäßen Verriegelungsmechanismus in entriegelter Position im Querschnitt.
Fig. 5 zeigt schematisch eine Ausführungsform des erfindungsgemäßen Bodenteils in Einsatzkonfiguration in Draufsicht.
Fig. 6 zeigt schematisch eine Ausführungsform des erfindungsgemäßen Bodenteils in Parkkonfiguration in Draufsicht.

Die Zeichnung ist nicht maßstäblich. Gleiche oder gleich wirkende Elemente sind mit denselben Bezugszeichen versehen, soweit nicht anders vermerkt.

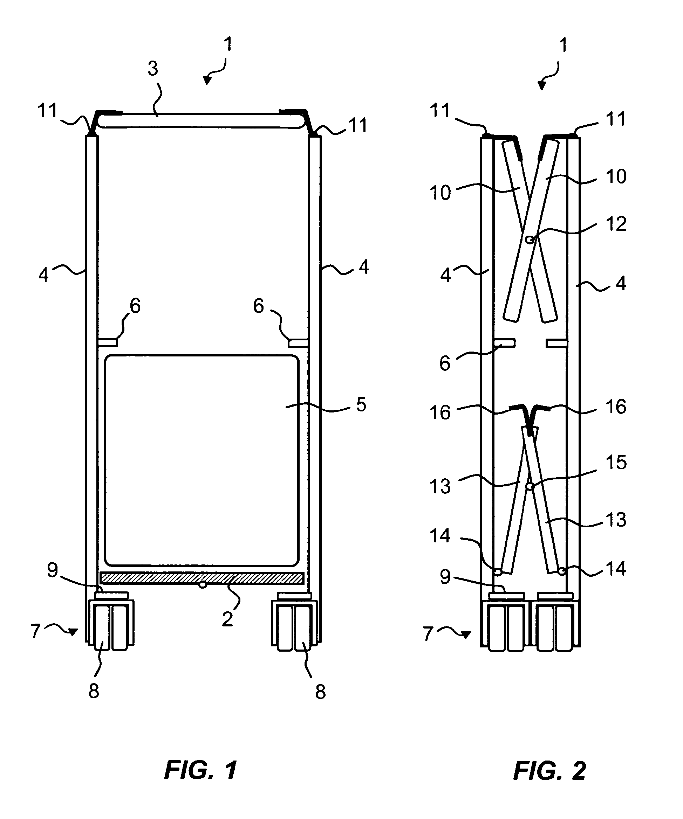

In Fig. 1 ist ein erfindungsgemäßer Transportwagen 1, insbesondere für den Einsatz an Bord von Flugzeugen gezeigt. Der Transportwagen 1 umfasst ein Bodenteil 2, das die zu transportierenden Waren und Güter trägt. Als Arbeitsfläche oder weitere Ablagefläche umfasst der Wagen 1 außerdem ein Deckelteil 3. Zwischen dem Bodenteil 2 und dem Deckelteil 3 befinden sich zwei Seitenteile 4, auf jeder Seite eines. Diese zwei Seitenteile 4 erstrecken sich im wesentlichen senkrecht zu einer Querrichtung des Transportwagens, d.h. der horizontalen Richtung in der Zeichenebene.

In dem von dem Bodenteil 2, dem Deckelteil 3 und den beiden Seitenteilen 4 gebildeten Stauraum lassen sich Waren und Transportgüter unterbringen, insbesondere als Inhalt von Transport-Containern 5. Dabei können mehrere dieser Transport-Container 5 in dem Transportwagen 1 untergebracht werden, nämlich nebeneinander und übereinander. Für Letzteres sind in der dargestellten Ausführungsform Zwischenstützen 6 eingebaut. Diese Zwischenstützen befinden sich in etwa der halben Höhe des Innenraums des Transportwagens 1, so dass zwei Container 5 übereinander in dem Wagen 1 gestapelt werden können.

Der Transportwagen 1 wird auf Schwenkrollen (Castoren) 7 bewegt. Die (Doppel-) Schwenkrollen 7 umfassen Einzelrollen oder Doppelrollen 8, die in einem (nicht dargestellten) Käfig auf einer (nicht dargestellten) horizontalen Welle gelagert sind. Der Käfig für die Rollen 8 ist seinerseits um eine vertikale Achse schwenkbar, so dass die Laufrichtung der Rolle(n) 8 jederzeit ohne weiteres geändert werden kann. Für eine derartige Schwenkbewegung ist ein Schwenkgelenk 9 vorgesehen. Einzelheiten zu den erfindungsgemäßen Eigenschaften des Schwenkgelenkes 7 werden weiter unten erläutert.

Der einklappbare Transportwagen 1 ist in Fig. 1 in seiner Einsatzkonfiguration gezeigt. In dieser Einsatzkonfiguration hat der Transportwagen seine maximale Ausdehnung in der Querrichtung, d.h. der horizontalen Richtung in der Zeichenebene.

In Fig. 2 ist der Transportwagen 1 in seiner Parkkonfiguration gezeigt, in der er eine minimale Ausdehnung in der Querrichtung aufweist. Wie aus dieser Darstellung erkennbar sind bei der gezeigten Ausführungsform des Transportwagens 1 das Bodenteil 2 sowie das Deckelteil 3 aus jeweils zwei Segmenten zusammengesetzt. Das Deckelteil 3 umfasst demnach zwei Deckelsegmente 10, die wenigstens die Hälfte des Abstandes zwischen den beiden Seitenteilen 4 abdecken. In der gezeigten Ausführungsform ergänzen sich die beiden Deckelsegmente 10 kammartig, d.h. beide Deckelsegmente 10 weisen (nicht gezeigte) Vorsprünge und (nicht gezeigte) Ausschnitte auf, die komplementär ineinander greifen, so dass die gesamte Oberfläche des Deckelteils 3 glatt und eben ist. Dies ist selbstverständlich jedoch nur eine mögliche Ausführungsform, weitere Ausführungsformen werden weiter unten erläutert.

Die Deckelsegmente 10 des Deckelteils 3 sind jeweils auf einer Deckelseitenachse 11 gelenkig mit einem Seitenteil 4 verbunden, so dass jedes Deckelsegment 10 aus einer im wesentlichen horizontalen Position in eine im wesentlichen vertikale Position und umgekehrt gebracht werden kann. Um mit der Klappbewegung gleichzeitig eine Transversalbewegung der Seitenteile 4 aufeinander zu oder voneinander weg zu bewirken, sind die beiden Deckelsegmente 10 außerdem auf einer gemeinsamen Deckelzentralachse 12 gelenkig mit dem jeweils anderen Deckelsegment 10 verbunden.

Analog zu dem Deckelteil 3 ist in der gezeigten Ausführungsform des erfindungsgemäßen Transportwagens 1 das Bodenteil 2 aufgebaut. Das Bodenteil 2 umfasst zwei Bodensegmente 13, die wenigstens die Hälfte des Abstandes zwischen den beiden Seitenteilen 4 abdecken. In der gezeigten Ausführungsform ergänzen sich die beiden Bodensegmente 13 kammartig, d.h. beide Bodensegmente 13 weisen (nicht gezeigte) Vorsprünge und (nicht gezeigte) Ausschnitte auf, die komplementär ineinander greifen, so dass die gesamte Oberfläche des Bodenteils 2 glatt und eben ist. Die Bodensegmente 13 des Bodenteils 2 sind jeweils auf einer Bodenseitenachse 14 gelenkig mit einem Seitenteil 4 verbunden, so dass jedes Bodensegment 13 aus einer im wesentlichen horizontalen Position in eine im wesentlichen vertikale Position und umgekehrt gebracht werden kann. Um mit der Klappbewegung gleichzeitig eine Transversalbewegung der Seitenteile 4 aufeinander zu oder voneinander weg zu bewirken und im übrigen die Klappbewegung des Deckelteils 3 zu unterstützen, sind die beiden Bodensegmente 13 außerdem auf einer gemeinsamen Bodenzentralachse 15 gelenkig mit dem jeweils anderen Bodensegment 13 verbunden.

Wenn ausgehend von der Einsatzkonfiguration des Wagens in Fig. 1 sowohl das Deckelteil 3 als auch das Bodenteil 2 eingeklappt werden, so wird der Übergang in die Parkkonfiguration des Wagens nach Fig. 2 bewirkt. Es ist ersichtlich aus dem Vergleich der beiden Figuren 1 und 2, dass die Ausdehnung des Transportwagens 1 in der Parkkonfiguration nach Fig. 2 wesentlich geringer ist als in der Einsatzkonfiguration nach Fig. 1. Damit lässt sich eine platzsparende Unterbringung des Transportwagens erreichen, wenn er nicht mit Waren beladen ist.

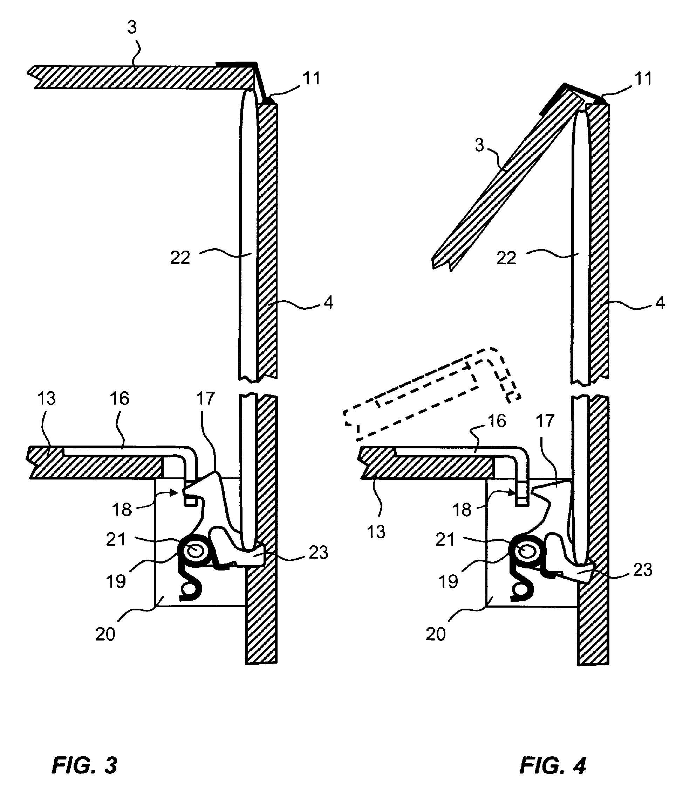

In Fig. 2 ist an dem jeweils freien Ende der Bodensegmente 13 ein Greifer 16 gezeigt, der zur Verankerung des Bodensegments 13 in einer horizontalen Position dient. Einzelheiten zu diesem Greifer werden in Bezug auf Fig. 3 und 4 erläutert.

Wie aus Fig. 2 ebenfalls ersichtlich kommen diejenigen Schwenkrollen 7 des Wagens 1, die sich in Querrichtung nebeneinander befinden, in der Parkkonfiguration einander sehr nahe, oder sie berühren sich sogar. Es kann sogar der Fall sein, dass der Abstand der Seitenteile 4 in der Parkkonfiguration durch die Breite der Schwenkrollen 7 bestimmt wird. Der minimale Abstand der Schwenkrollen 7 und damit der Seitenteile 4 voneinander wird dann erreicht, wenn sich die jeweils benachbarten Schwenkrollen 7 parallel zueinander ausrichten. Eine parallele Ausrichtung der jeweils benachbarten Schwenkrollen 7 zueinander ist auch in Bezug auf das Fahren des Transportwagens 1 in der Parkkonfiguration von Vorteil. Um die parallel Ausrichtung der Schwenkrollen 7 zueinander zu "erzwingen", weist jede der Schwenkrollen 7 einen Magneten auf. Bei gleichsinniger Ausrichtung der Magnete (z.B. Nordpol links in Fig. 2, Südpol rechts) bei allen Schwenkrollen ist so gewährleistet, dass sich benachbarte Schwenkrollen 7 parallel zueinander stellen, wenn ihr Abstand voneinander kleiner als ein vorgegebener Abstand wird.

Es ist offensichtlich, dass der Transportwagen 1 in der Einsatzkonfiguration arretiert und gesichert werden muss. Andererseits soll der Wagen 1 ohne großen Aufwand in die Parkkonfiguration gebracht werden. Dazu ist bei der Ausführungsform der Erfindung nach Fig. 3 bzw. 4 ein Bodenverriegelungsmechanismus vorgesehen, der durch Manipulation des Deckelteils 3 betätigt wird. Fig. 3 zeigt einen vergrößerten Ausschnitt von Fig. 1 mit zusätzlichen Elementen. Der Wagen 1 ist in der Einsatzkonfiguration. Das Deckelteil 3 ist im wesentlichen horizontal angeordnet. Des gleichen ist das Bodensegment 13 im wesentlichen horizontal angeordnet. In der gezeigten Ausführungsform weist es den Greifer 16 auf, mit dem die Arretierung des Bodensegments 13 in der horizontalen Position vereinfacht wird. Das Bodensegment 13 mit Greifer 16 wird gehalten von einem Haken 17, der in eine Öse 18 in dem Greifer 16 greift. Dabei wird der Haken 17 durch eine Vorspannfeder 19 in die Öse 18 gedrückt. Der Haken 17 ist auf einem Befestigungssockel 20 montiert und dreht sich um eine Drehachse 21. Der Befestigungssockel 20 kann sich über die gesamte Länge des Seitenteils 4 erstrecken, ggfs. versehen mit Aussparungen an vorgegebenen Stellen. Auf dem Befestigungssockel 20 für den Haken 17 liegt in der dargestellten Ausführungsform das Bodensegment 13 auf. Alternativ kann der Greifer 16 auf einer (nicht dargestellten) Schiene aufliegen, so dass auch in Querrichtung eine Bewegung des Bodensegments unmöglich wird. Die Drehachse 21 verläuft in dem Sockel 20 parallel und in einem gegebenen Abstand zu der (nicht gezeigten) Bodenseitenachse 14.

Aus seiner durch die Vorspannfeder 19 bestimmten Ruhelage wird der Haken 17 durch eine Betätigungsstange 22 bewegt. Die Betätigungsstange 22 drückt dazu auf eine Aufnahmepfanne 23, die fest mit dem Haken 17 verbunden ist. Diese Aufnahmepfanne 23 hat einen vorgegebenen Abstand von der Drehachse 21 des Hakens 17, der je nach gewünschtem Drehmoment für die Bewegung des Hakens 17 gewählt wird.

Die Betätigungsstange 22 erstreckt sich von der Aufnahmepfanne in Höhe des Hakens 17 bis zu dem Deckelteil 3 am oberen Ende des Transportwagens 1. Durch Manipulation des Deckelteils 3 wird folglich der Haken 17 aus seiner Ruheposition herausgedreht. Dies ist in Fig. 4 dargestellt. Durch den Druck der Stange 22 auf die Aufnahmepfanne 23 dreht sich der Haken 17 um seine Achse 21 und gibt dadurch die Öse 18 in dem Greifer 16 frei. Dieser Bewegung stellt sich nur die Vorspannfeder 19 entgegen, deren Kraft überwunden werden muss. Sobald der Haken 17 die Öse 18 freigegeben hat, kann das Bodensegment 13 angehoben werden, was gestrichelt in Fig. 4 angedeutet ist. Damit lassen sich die einander gegenüberliegenden Seitenteile 4 aufeinander zu bewegen und so der Transportwagen 1 in die Parkkonfiguration bringen.

Es versteht sich in diesem Zusammenhang, dass das Deckelteil 3 in der Einsatzkonfiguration verriegelbar sein muss, um ein versehentliches Auslösen des Bodenverriegelungsmechanismus zu verhindern. Entsprechend ist das Deckelteil 3 mit einem (nicht dargestellten) Deckelverriegelungsmechanismus versehen, der das Deckelteil 3 in einer im wesentlichen horizontalen Position hält, aus der es nur durch Auslösen des Deckelverriegelungsmechanismus bewegt werden kann.

Die genannten Bewegungsabläufe können durch entsprechend gewählte Federn unterstützt werden. So kann beispielsweise ein Deckelsegment 10 durch eine Feder um die Deckelseitenachse 11 in eine im wesentlichen vertikale Stellung zu dem Seitenteil 4 vorgespannt sein. Zusätzlich können auch die beiden Deckelsegmente 10 durch eine Feder um die gemeinsame Deckelzentralachse 12 in eine im wesentlichen koplanare Stellung vorgespannt sein. Analog gilt dies auch für die Bodensegmente. Eine Feder um die Bodenseitenachse 14 kann wenigstens ein Bodensegment 13 in eine im wesentlichen vertikale Stellung zu dem Seitenteil 4 vorspannen. Zusätzlich können die beiden Bodensegmente 13 durch eine Feder um die gemeinsame Bodenzentralachse 15 in eine im wesentlichen koplanare Stellung vorgespannt sein. Es versteht sich hier, dass auch der umgekehrte Effekt erreicht werden kann, nämlich dass nicht das "Entfalten" des Wagens 1 unterstützt wird, sondern das "Zusammenfalten" des Wagens. In diesem Fall sind die Vorspannrichtungen alle umzudrehen, so dass an den Seitenachsen 11 und 14 das Einklappen der Segmente 10, 13 in Richtung auf ein Seitenteil 4 unterstützt wird und an den Zentralachsen 12, 15 das Zusammenklappen der Segmente 10, 13 unterstützt wird.

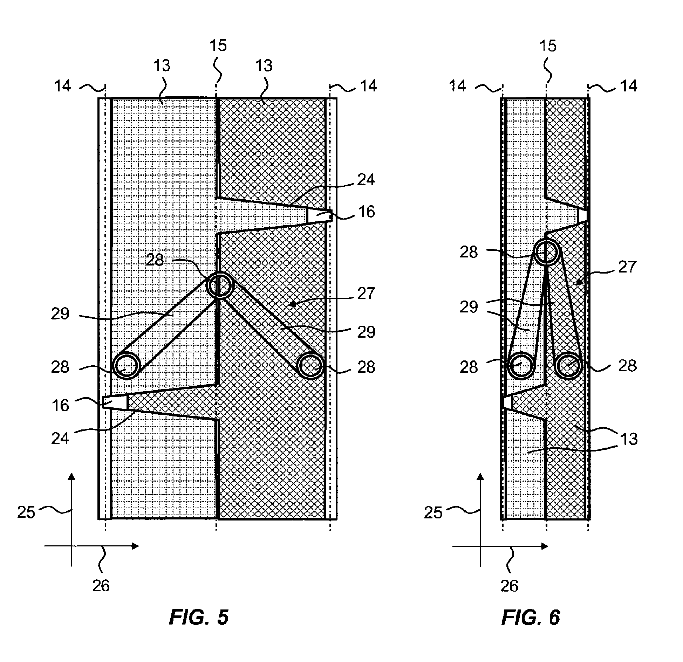

Die Bewegung des Bodenteils 2 beim Übergang von der Einsatzkonfiguration in die Parkkonfiguration wird im folgenden anhand von Fig. 5 und 6 erläutert. Fig. 5 und 6 zeigen das einklappbare Bodenteil 2 mit zwei flächigen Bodensegmenten 13 in Draufsicht. Die Bodensegmente 13 erstrecken sich parallel zueinander in einer Längsrichtung 25, die in Fig. 5 und 6 jeweils nach oben zeigt. Die Querrichtung ist in Fig. 5 und 6 mit 26 bezeichnet.

In der Einsatzkonfiguration nach Fig. 5 haben die beiden jeweils auf einer Bodenseitenachse 14 gelenkig mit einem Seitenteil verbundenen Bodensegmente 13 ihre maximale Ausdehnung in der Querrichtung 26. Beide Bodensegmente 13 umfassen jeweils einen Verlängerungs- oder Übergreifarm 24, mit dem sie das jeweils andere Bodensegment 13 überdecken. Am freien Ende des Übergreifarms 24 ist der Greifer 16 angeordnet. Im Zusammenwirken mit dem Greifer 16 hält der Haken 17 das Bodensegment 13 in einer Horizontalposition, wie es in Zusammenhang mit Fig. 3 und 4 erläutert wurde. Durch den Übergreifarm 24 wird das jeweils andere Bodensegment 13 nach unten gedrückt, so dass auch bei Ausfall einer Hakenvorrichtung die beiden Bodensegmente 13 durch die verbleibende Hakenvorrichtung in der Horizontalposition gehalten werden.

Da die beiden Bodensegmente 13 außerdem auf einer gemeinsamen Bodenzentralachse 15 gelenkig miteinander verbunden sind, ziehen sie beim Übergang von der Horizontalen in die Vertikale die beiden Seitenteile zusammen. Dies ergibt sich aus Fig. 6. Die Bodensegmente 13 werden in den Transportwagen hineingeklappt, was in der Darstellung in Fig. 6 zu einer perspektivischen Verschmälerung der beiden Bodensegmente 13 führt. Die Annäherung der beiden Seitenteile endet erst dann, wenn sich die Schwenkrollen unter den Seitenteilen berühren.

Zur Stabilisierung des Transportwagens 1 ist in der gezeigten Ausführungsform ein Stabilisierungsgelenk 27 dargestellt, das sich unterhalb der Bodensegmente befindet. In der gezeigten Ausführungsform umfasst das Stabilisierungsgelenk 27 zwei Schenkel 29, über jeweils ein Gelenk 28 mit einem Seitenteil 4 verbunden sind und mit einem weiteren Gelenk 28 miteinander verbunden sind. Im Gegensatz zu der Verbindung der Bodensegmente 13 und Deckelsegmente 10 mit den Seitenteilen 4 in horizontaler Richtung liegen die Achsen der Gelenke 28 vertikal.

Weitere vorteilhafte Ausführungsformen der Erfindung sind dem Fachmann im Rahmen der vorgestellten technischen Lehre geläufig. So können etwa die zwei Seitenteile 4 (nicht dargestellte) flächige Wandelemente umfassen, so dass der Innenraum des Wagens blickdicht ist. Alternativ können die Seitenteile lediglich einen Rahmen darstellen.

### Bezugszeichen

- 1: Transportwagen
- 2: Bodenteil
- 3: Deckelteil
- 4: Seitenteil
- 5: Warenbehälter, Container
- 6: Zwischenstütze
- 7: Schwenk-Doppelrolle (Castor)
- 8: Rolle
- 9: Schwenkgelenk
- 10: Deckelsegment
- 11: Deckelseitenachse
- 12: Deckelzentralachse
- 13: Bodensegment
- 14: Bodenseitenachse
- 15: Bodenzentralachse
- 16: Greifer
- 17: Haken
- 18: Öse
- 19: Vorspannfeder für Haken
- 20: Befestigungssockel
- 21: Drehachse für Haken
- 22: Betätigungsstange
- 23: Aufnahmepfanne für Betätigungsstange
- 24: Verlängerungsarm, Übergreifarm
- 25: Längsrichtung
- 26: Querrichtung
- 27: Stabilisierungsgelenk
- 28: vertikale Achse
- 29: Schenkel

## Patentansprüche

1. Einklappbarer Transportwagen, der in einer Parkkonfiguration eine minimale Ausdehnung und in einer Einsatzkonfiguration eine maximale Ausdehnung in einer Querrichtung (26) aufweist, der umfasst:
- zwei Seitenteile (4), die sich im wesentlichen senkrecht zu der Querrichtung (26) des Transportwagens erstrecken, und
- ein einklappbares Bodenteil (2), das zwei flächige Bodensegmente (13) umfasst, die jeweils auf einer Bodenseitenachse (14) gelenkig mit einem Seitenteil (4) und auf einer gemeinsamen Bodenzentralachse (15) gelenkig miteinander verbunden sind, so dass sie in den Transportwagen hineinklappbar sind,
weiters umfassend einen Bodenverriegelungsmechanismus (17 - 24) zum Verriegeln des einklappbaren Bodenteils (2) in der Einsatzkonfiguration und
ein Deckelteil (3), das gelenkig mit einem der Seitenteile (4) verbunden ist, **dadurch gekennzeichnet, dass**
der Bodenverriegelungsmechanismus (17 - 24) den einklappbaren Bodenteil (2) freigibt, wenn das Deckelteil (3) in den Transportwagen hineingeklappt wird.

2. Einklappbarer Transportwagen nach Anspruch 1, bei dem der Bodenverriegelungsmechanismus (17 - 24) wenigstens einen drehbaren Haken (17) umfasst, der in der Einsatzkonfiguration des Wagens das dem Haken (17) gegenüberliegende Bodensegment (13) an seinem freien Ende in einer im wesentlichen horizontalen Position hält.

3. Einklappbarer Transportwagen nach Anspruch 2, bei dem der wenigstens eine Haken (17) um die Bodenseitenachse (14) drehbar ist und das dem Haken (17) gegenüberliegende Bodensegment (13) wenigstens einen Verlängerungsarm (24) umfasst, der in der Einsatzkonfiguration von dem Haken (17) in einer im wesentlichen horizontalen Position gehalten wird.

4. Einklappbarer Transportwagen nach Anspruch 3, bei dem an einem freien Ende des Verlängerungsarms (24) ein Greifer (16) angeordnet ist, der insbesondere eine Öse (18) als Gegenstück zu dem Haken (17) umfasst.

5. Einklappbarer Transportwagen nach einem der Ansprüche 2 bis 4, bei dem der Bodenverriegelungsmechanismus (17 - 24) wenigstens eine Betätigungsstange (22) umfasst, die eine Drehbewegung des Deckelteils (3) auf den drehbaren Haken (17) überträgt, so dass dieser das gegenüberliegende Bodensegment (13) freigibt.

6. Einklappbarer Transportwagen nach einem der Ansprüche 2 bis 5, bei dem der Haken (17) durch eine Vorspannfeder (19) in eine Halteposition vorgespannt ist.

7. Einklappbarer Transportwagen nach einem der vorangehenden Ansprüche, bei dem wenigstens ein Bodensegment (13) durch eine Feder um die Bodenseitenachse (14) in eine im wesentlichen vertikale Stellung zu dem Seitenteil (4) vorgespannt ist.

8. Einklappbarer Transportwagen nach einem der vorangehenden Ansprüche, bei dem die beiden Bodensegmente (13) durch eine Feder um die gemeinsame Bodenzentralachse (15) in eine im wesentlichen koplanare Stellung vorgespannt sind.

9. Einklappbarer Transportwagen nach einem der vorangehenden Ansprüche, bei dem das Deckelteil (3) ein erstes und ein zweites Deckelsegment (10) umfasst, die jeweils auf einer Deckelseitenachse (11) gelenkig mit einem Seitenteil (4) und auf einer gemeinsamen Deckelzentralachse (12) gelenkig miteinander verbunden sind.

10. Einklappbarer Transportwagen nach einem der vorangehenden Ansprüche, bei dem wenigstens ein Deckelsegment (10) durch eine Feder um die Deckelseitenachse (11) in eine im wesentlichen vertikale Stellung zu dem Seitenteil (4) vorgespannt ist.

11. Einklappbarer Transportwagen nach einem der vorangehenden Ansprüche, bei dem die beiden Deckelsegmente (10) durch eine Feder um die gemeinsame Deckelzentralachse (12) in eine im wesentlichen koplanare Stellung vorgespannt sind.

12. Einklappbarer Transportwagen nach einem der vorangehenden Ansprüche, bei dem das Deckelteil (3) durch einen Deckelverriegelungsmechanismus in der Einsatzkonfiguration verriegelbar ist.

13. Einklappbarer Transportwagen nach einem der vorangehenden Ansprüche, bei dem wenigstens ein Stabilisierungsgelenk (27) mit drei im wesentlichen vertikalen Achsen (28) unterhalb der Bodensegmente (13) vorgesehen ist, das in der Einsatzkonfiguration des Transportwagens eine im wesentlichen lineare Form aufweist und in der Parkkonfiguration des Transportwagens im wesentlichen die Form eines gleichschenkligen Dreiecks aufweist.

14. Einklappbarer Transportwagen nach einem der vorangehenden Ansprüche, bei dem die Seitenteile (4) auf Schwenkrollen (7) fußen, die um eine vertikale Achse drehbar sind, wobei jede der Schwenkrollen (7) einen Magneten aufweist, so dass sich benachbarte Schwenkrollen parallel zueinander stellen, wenn ihr Abstand voneinander kleiner als ein vorgegebener Abstand ist.

15. Einklappbarer Transportwagen nach einem der vorangehenden Ansprüche, bei dem die zwei Seitenteile (4) flächige Wandelemente umfassen.

## Claims

1. Folding transport cart which has a minimum extension in a transverse direction in a parking configuration and a maximum extension in a transverse direction (26) in an operative configuration, the cart comprising:
- two side parts (4) which extend substantially perpendicular to the transverse direction (26) of the transport cart, and
- a foldable base part (2) which comprises two flat base segments (13) which are each connected for articulated movement on a base side axis (14) to one side part (4) and on a common base central axis (15) for articulated movement to one another so that they can be folded inwards into the transport cart,
further comprising
a base locking mechanism (17 - 24) for locking the foldable base part (2) in the operative configuration and a cover part (3) which is connected for articulated movement to one of the side parts (4),
**characterized in that** the base locking mechanism (17 - 24) releases the foldable base part (2) when the cover part (3) is folded inwards into the transport cart.

2. Folding transport cart according to claim 1 in which the base locking mechanism (17 - 24) comprises at least one rotatable hook (17) which in the operative configuration of the transport cart holds the base segment (13) opposite the hook (17) by its free end in a substantially horizontally position.

3. Folding transport cart according to claim 2 in which the at least one hook (17) is rotatable about the base side axis (14) and the base segment (13) opposite the hook (17) comprises at least one extension arm (24) which is held in the operative configuration in a substantially horizontal position by the hook (17).

4. Folding transport cart according to claim 3 in which a gripper (16) is mounted at one free end of the extension arm (24) and in particular comprises a lug (18) as a counter member to the hook (17).

5. Folding transport cart according to one of claims 2 to 4 in which the base locking mechanism (17 - 24) comprises at least one actuating rod (22) which transfers a rotational movement of the cover part (3) to the rotatable hook (17) so that the latter releases the opposing base segment (13).

6. Folding transport cart according to one of claims 2 to 5 in which the hook (17) is pretensioned by a pretensioning spring (19) into a holding position.

7. Folding transport cart according to one of the preceding claims in which at least one base segment (13) is biased by a spring about the base side axis (14) towards a substantially vertical position with respect to the side part (4).

8. Folding transport cart according to one of the preceding claims in which the two base segments (13) are biased by a spring about the common base central axis (15) towards a substantially co-planar position.

9. Folding transport cart according to one of the preceding claims in which the cover part (3) comprises a first and a second cover segment (10) which are each connected to a side part (4) on a cover side axis (11) for articulated movement and to one another on a common cover central axis (12) for articulated movement.

10. Folding transport cart according to one of the preceding claims in which at least one cover segment (10) is biased by a spring about the cover side axis (11) towards a substantially vertical position with respect to the side part (4).

11. Folding transport cart according to one of the preceding claims in which the two cover segments (10) are biased by a spring about the common cover central axis (12) towards a substantially co-planar position.

12. Folding transport cart according to one of the preceding claims in which the cover part (3) is lockable in the operative configuration by a cover locking mechanism.

13. Folding transport cart according to one of the preceding claims in which at least one stabilising articulated joint (27) with three substantially vertical axes (28) is provided underneath the base segments (13) and in the operative configuration of the transport cart has a substantially linear shape and in the parking configuration of the transport cart has a substantially isosceles triangular shape.

14. Folding transport cart according to one of the preceding claims in which the side parts (4) stand on castors (7) which are rotatable about a vertical axis wherein each of the castors (7) has a magnet so that adjoining castors stand parallel to one another when their distance from each other is less than a predetermined spacing.

15. Folding transport cart according to one of the preceding claims in which the two side parts (4) comprise flat wall elements.

## Revendications

1. Chariot de transport repliable, qui présente, dans une direction transversale (26), une extension minimale dans une configuration de stationnement et une extension maximale dans une configuration d'utilisation, le chariot comportant :
- deux parties latérales (4) s'étendant essentiellement perpendiculairement à la direction transversale (26) du chariot de transport, et
- une partie de base (2) repliable comportant deux segments de base (13) plans qui sont reliés respectivement à une partie latérale (4) de manière articulée sur un axe latéral de base (14) et sont reliés l'un à l'autre de manière articulée sur un axe central de base (15) commun de sorte qu'ils puissent être repliés à l'intérieur du chariot de transport,
ledit chariot comprenant en outre un mécanisme de verrouillage de base (17-24) servant à verrouiller la partie de base (2) repliable en configuration d'utilisation et une partie couvercle (3), qui est reliée de manière articulée à l'une des parties latérales (4),
**caractérisé en ce que**
le mécanisme de verrouillage de base (17-24) libère la partie de base (2) repliable, lorsque la partie couvercle (3) est repliée dans le chariot de transport.

2. Chariot de transport repliable selon la revendication 1, dans le cadre duquel le mécanisme de verrouillage de base (17-24) comporte au moins un crochet (17) rotatif qui, au niveau de son extrémité libre, maintient, dans une position essentiellement horizontale, le segment de base (13) opposé au crochet (17), lorsque le chariot se trouve dans une configuration d'utilisation.

3. Chariot de transport repliable selon la revendication 2, dans lequel l'au moins un crochet (17) est rotatif autour de l'axe latéral de base (14) et le segment de base (13) opposé au crochet (17) comporte au moins un bras prolongateur (24) qui est maintenu dans une position essentiellement horizontale lorsque le crochet (17) se trouve dans une configuration d'utilisation.

4. Chariot de transport repliable selon la revendication 3, dans lequel une pince (16) est disposée au niveau d'une extrémité libre du bras prolongateur (24), ladite pince comportant en particulier un oeillet (18) comme complément du crochet (17).

5. Chariot de transport repliable selon l'une quelconque des revendications 2 à 4, dans lequel le mécanisme de verrouillage de base (17-24) comporte au moins une tige d'actionnement (22) qui transmet un mouvement de rotation de la partie couvercle (3) sur le crochet (17) rotatif de sorte que ce dernier libère le segment de base (13) opposé.

6. Chariot de transport repliable selon l'une quelconque des revendications 2 à 5, dans le cadre duquel le crochet (17) est précontraint dans une position d'arrêt par un ressort de prétention (19).

7. Chariot de transport repliable selon l'une quelconque des revendications précédentes, dans lequel au moins un segment de base (13) est précontraint, dans une position essentiellement perpendiculaire à la partie latérale (4), par un ressort autour de l'axe latéral de base (14).

8. Chariot de transport repliable selon l'une quelconque des revendications précédentes, dans le cadre duquel les deux segments de base (13) sont précontraints, dans une position essentiellement coplanaire, par un ressort autour de l'axe central de base (15) commun.

9. Chariot de transport repliable selon l'une quelconque des revendications précédentes, dans lequel la partie couvercle (3) comporte un premier segment couvercle et un deuxième segment couvercle (10) qui sont reliés respectivement à une partie latérale (4) de manière articulée sur un axe latéral couvercle (11) et sont mutuellement reliés de manière articulée sur un axe central couvercle (12) commun.

10. Chariot de transport repliable selon l'une quelconque des revendications précédentes, dans lequel au moins un segment couvercle (10) est précontraint dans une position essentiellement perpendiculaire à la partie latérale (4) par un ressort autour de l'axe latéral couvercle (11).

11. Chariot de transport repliable selon l'une quelconque des revendications précédentes, dans lequel les deux segments couvercle (10) sont précontraints, dans une position essentiellement coplanaire, par un ressort autour de l'axe central couvercle (12) commun.

12. Chariot de transport repliable selon l'une quelconque des revendications précédentes, dans lequel la partie couvercle (3) verrouill, par un mécanisme de verrouillage couvercle, dans une configuration d'utilisation.

13. Chariot de transport repliable selon l'une quelconque des revendications précédentes, dans lequel au moins une articulation de stabilisation (27) est prévue avec trois axes (28) essentiellement verticaux, sous les segments de base (13), laquelle articulation de stabilisation présente une forme essentiellement linéaire lorsque le chariot de transport se trouve dans une configuration d'utilisation et laquelle présente essentiellement la forme d'un triangle équilatéral lorsque le chariot de transport se trouve dans une configuration de stationnement.

14. Chariot de transport repliable selon l'une quelconque des revendications précédentes, dans lequel les parties latérales (4) reposent sur des roulettes pivotantes (7), rotatives autour d'un axe vertical, chacune des roulettes pivotantes (7) présentant un aimant de sorte que les roulettes pivotantes adjacentes se placent de manière mutuellement parallèle lorsque leur espacement mutuel est inférieur à une distance prédéfinie.

15. Chariot de transport repliable selon l'une quelconque des revendications précédentes, dans lequel les deux parties latérales (4) comportent des éléments de paroi plans.
